(19) Europäisches Patentamt
European Patent Office
Office européen des brevets

(11) **EP 4 269 129 A1**

(12) **EUROPEAN PATENT APPLICATION**
published in accordance with Art. 153(4) EPC

(43) Date of publication:
**01.11.2023 Bulletin 2023/44**

(21) Application number: **21911054.1**

(22) Date of filing: **24.12.2021**

(51) International Patent Classification (IPC):
**B60C 1/00** $^{(2006.01)}$     **C09D 5/00** $^{(2006.01)}$
**C09D 171/02** $^{(2006.01)}$     **C09D 7/20** $^{(2018.01)}$

(52) Cooperative Patent Classification (CPC):
**B60C 1/00; C09D 5/00; C09D 7/20; C09D 171/02**

(86) International application number:
**PCT/JP2021/048202**

(87) International publication number:
**WO 2022/138917 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020 JP 2020216019**

(71) Applicant: **The Yokohama Rubber Co., Ltd.
Hiratsuka-shi, Kanagawa 254-8601 (JP)**

(72) Inventors:
• **OKAMATSU, Takahiro
Hiratsuka-shi, Kanagawa 254-8601 (JP)**
• **AKIYAMA Hisae
Hiratsuka-shi, Kanagawa 254-8601 (JP)**

(74) Representative: **Grünecker Patent- und
Rechtsanwälte
PartG mbB
Leopoldstraße 4
80802 München (DE)**

(54) **VULCANIZED RUBBER PRE-ADHESION TREATMENT AGENT**

(57)     The present invention is to provide a pre-treatment agent for a vulcanized rubber, the pre-treatment agent being a treatment agent for treating a surface of a vulcanized rubber before application of an adhesive to the vulcanized rubber, and allowing the adhesive to exhibit excellent adhesiveness after curing. The pre-treatment agent for a vulcanized rubber according to an embodiment of the present invention is a pre-adhesion treatment agent for a vulcanized rubber, the treatment agent containing: a non-ionic surfactant, water, and an organic solvent; the non-ionic surfactant having an HLB value of 4.5 or greater and 10.5 or less and being a compound represented by Formula (1); the organic solvent being a compound represented by Formula (2); and a content of the non-ionic surfactant being from 0.5 to 30 mass%. $HO\text{-}(R^{11}\text{-}O)_n\text{-}R^{12}$ (1) $R^{11}$ represents $-CH_2\text{-}CH_2\text{-}$, $-CH(CH_3)\text{-}CH_2\text{-}$, or $-CH_2\text{-}CH(CH_3)\text{-}$. $R^{12}$ represents an aliphatic hydrocarbon group. n represents an integer of 1 or greater.

$$R^{21}R^{22}N\text{-}CO\text{-}R^{23} \qquad (2)$$

$R^{21}$, $R^{22}$, and $R^{23}$ each represent a hydrogen atom or a substituent. $R^{21}$ or $R^{22}$ may be bonded to $R^{23}$ to form a ring.

EP 4 269 129 A1

**Description**

Technical Field

The present invention relates to a pre-adhesion treatment agent for a vulcanized rubber.

Background Art

In the related art, there is a system that monitors information (e.g., air pressure) of tires mounted on an automobile by utilizing the Internet of things (IoT).

The system includes a container for housing a device such as a sensor (detector) in the inner portion of a tire to monitor the information of the tire. Typically, the container is fixed to a tire (e.g., innerliner) by an adhesive. Furthermore, it is known that, at the time of application of an adhesive to a tire, a surface of the tire is pre-treated (e.g., Patent Document 1).

Citation List

Patent Literature

Patent Document 1: JP 2005-350057 A

Summary of Invention

Technical Problem

In a case where a container is fixed to a tire (e.g., innerliner) by an adhesive, when adhesiveness of the adhesive after curing is not sufficient, the container may be detached due to rotation and vibration of the tire. Therefore, the adhesiveness of the adhesive after curing is significantly important.

Under such circumstance, using Patent Document 1 as a reference, when the present inventors compression-bonded a rubber container containing a sensor by applying an adhesive after treating the surface of the innerliner with an organic solvent, it was found that the adhesiveness of the adhesive after curing is not always satisfactory.

In light of such a circumstance, an object of the present invention is to provide a pre-treatment agent for a vulcanized rubber, the pre-treatment agent being a treatment agent for treating a surface of a vulcanized rubber such as a tire before application of an adhesive to the vulcanized rubber, and allowing the adhesive to exhibit excellent adhesiveness after curing.

Hereinafter, the adhesiveness of an adhesive after curing is simply referred to as adhesiveness.

Solution to Problem

As a result of diligent research to solve the problem described above, the present inventors found that the problem can be solved by a combined use of a specific non-ionic surfactant, water, and a specific organic solvent, and thus completed the present invention.

In other words, the present inventors have found that the above-described problem can be solved by the following configurations.

(1) A pre-adhesion treatment agent for a vulcanized rubber, the treatment agent containing: a specific non-ionic surfactant, water, and a specific organic solvent;

the specific non-ionic surfactant having an HLB value of 4.5 or greater and 10.5 or less and being a compound represented by Formula (1) below;
the specific organic solvent being a compound represented by Formula (2) below; and
a content of the specific non-ionic surfactant being 0.5 mass% or greater and 30 mass% or less.

$$HO\text{-}(R^{11}\text{-}O)_n\text{-}R^{12} \qquad (1)$$

In Formula (1), $R^{11}$ represents $-CH_2-CH_2-$, $-CH(CH_3)-CH_2-$, or $-CH_2-CH(CH_3)-$. $R^{12}$ represents an aliphatic

hydrocarbon group. n represents an integer of 1 or greater.

$$R^{21}R^{22}N\text{-}CO\text{-}R^{23} \qquad (2)$$

In Formula (2), $R^{21}$, $R^{22}$, and $R^{23}$ each independently represent a hydrogen atom or a substituent. $R^{21}$ or $R^{22}$ may be bonded to $R^{23}$ to form a ring.

> (2) The pre-adhesion treatment agent for a vulcanized rubber according to (1) above, where $R^{12}$ in Formula (1) above is an aliphatic hydrocarbon group having from 12 to 18 carbons.
> (3) The pre-adhesion treatment agent for a vulcanized rubber according to (1) or (2) above, where n in Formula (1) above is an integer of 1 to 15.
> (4) The pre-adhesion treatment agent for a vulcanized rubber according to any one of (1) to (3) above, where the pre-adhesion treatment agent for a vulcanized rubber is a pre-adhesion treatment agent for a tire.
> (5) The pre-adhesion treatment agent for a vulcanized rubber according to (4) above, where the pre-adhesion treatment agent for a vulcanized rubber is a pre-adhesion treatment agent for an innerliner.

Advantageous Effects of Invention

As described below, according to an embodiment of the present invention, a pre-treatment agent for a vulcanized rubber can be provided, which is a treatment agent for treating a surface of a vulcanized rubber before application of an adhesive to the vulcanized rubber, and allows the adhesive to exhibit excellent adhesiveness after curing.

Description of Embodiments

The pre-treatment agent for a vulcanized rubber according to an embodiment of the present invention will be described below.
Note that in the present specification, value range indicated by using "from... to..." means the range including the former value as a lower limit value and the latter value as an upper limit value.
Furthermore, for each of the components contained in the pre-treatment agent for a vulcanized rubber according to an embodiment of the present invention, one type may be used alone or two or more types may be used in combination. Here, when two or more types for each of the components are used in combination, the content of the corresponding component refers to the total content unless otherwise specified.
Furthermore, in the present specification, "pre-adhesion treatment agent for a vulcanized rubber" is also simply referred to as "pre-treatment agent".

Pre-treatment agent for vulcanized rubber

The pre-treatment agent for a vulcanized rubber according to an embodiment of the present invention (hereinafter, also referred to as "pre-treatment agent according to an embodiment of the present invention") is

> a pre-adhesion treatment agent for a vulcanized rubber, the treatment agent containing: a specific non-ionic surfactant, water, and a specific organic solvent;
> the specific non-ionic surfactant having an HLB value of 4.5 or greater and 10.5 or less and being a compound represented by Formula (1) below;
> the specific organic solvent being a compound represented by Formula (2) below; and
> a content of the specific non-ionic surfactant being from 0.5 mass% or greater and 30 mass% or less.

It is conceived that the effects described above are achieved since the pre-treatment agent of an embodiment of the present invention has such a composition. The reason is presumed as follows.
Typically, on a surface of a vulcanized rubber such as an innerliner, substances such as a release agent, carbon black, a filler, an oil, and dust (hereinafter, also referred to as "surface attaching substances") are attached.
In a case where a surface of the vulcanized rubber is treated with the pre-treatment agent according to an embodiment of the present invention, it is conceived that the surface attaching substances are efficiently removed (floated from the surface). The reason for this is not clear, but it is conceived that, although the surface-attaching substances include substances having a high polarity and substances having a low polarity, since the pre-treatment agent according to an embodiment of the present invention contains a combination of the specific non-ionic surfactant, water, and the specific organic solvent, it tends to interact with surface-attaching substances having various polarities. Furthermore, it is conceived that, since the specific non-ionic surfactant used in the pre-treatment agent according to an embodiment of the present invention has the HLB value in the specific range, an oil film is less likely to be formed even when the pre-treatment agent remains on the surface of the vulcanized rubber.

As a result, it is conceived that, when an adhesive is applied to a surface of a vulcanized rubber after the surface of the vulcanized rubber is treated with the pre-treatment agent according to an embodiment of the present invention, adhesiveness of the adhesive after curing becomes significantly excellent.

The components contained in the pre-treatment agent according to an embodiment of the present invention will be described in detail below.

Specific non-ionic surfactant

The specific non-ionic surfactant has an HLB value of 4.5 or greater and 10.5 or less and is a compound represented by Formula (1) below. The pre-treatment agent according to an embodiment of the present invention may contain two or more types of specific non-ionic surfactants.

HLB value

As described above, the specific non-ionic surfactant has an HLB value of 4.5 or greater and 10.5 or less. Among these, from the perspective of achieving superior effects of the present invention, the HLB value is preferably from 6.0 to 9.0.

Note that the HLB value is the hydrophile-lipophile balance (hydrophilic-lipophilic balance) and is a value indicating the magnitude of hydrophilicity or lipophilicity of a compound. A smaller HLB value indicates a higher lipophilicity, and a larger HLB value indicates a higher hydrophilicity. In the present specification, the HLB value refers to an HLB value determined by the Griffin method. The HLB value by the Griffin method can be determined by the following equation.

$$\text{Equation: HLB value} = 20 \times \text{formula weight of hydrophilic moiety of}$$
$$\text{surfactant/molecular weight of entire surfactant}$$

In the present specification, the hydrophilic moiety of the surfactant refers to $HO\text{-}(R^{11}\text{-}O)_n\text{-}$ in Formula (1) described below.

Formula (1)

As described above, the specific non-ionic surfactant is a compound represented by Formula (1) below.

$$HO\text{-}(R^{11}\text{-}O)_n\text{-}R^{12}\ (1)$$

In Formula (1), $R^{11}$ represents $-CH_2\text{-}CH_2\text{-}$, $-CH(CH_3)\text{-}CH_2\text{-}$, or $-CH_2\text{-}CH(CH_3)\text{-}$. $R^{12}$ represents an aliphatic hydrocarbon group. n represents an integer of 1 or greater.

$R^{11}$

As described above, $R^{11}$ represents $-CH_2\text{-}CH_2\text{-}$, $-CH(CH_3)\text{-}CH_2\text{-}$, or $-CH_2\text{-}CH(CH_3)\text{-}$. Among these, from the perspective of achieving superior effects of the present invention, $-CH_2\text{-}CH_2\text{-}$ is preferred. In a case where n in Formula (1) is an integer of 2 or greater, a plurality of $R^{11}$ moieties may be the same or different.

$R^{12}$

As described above, $R^{12}$ represents an aliphatic hydrocarbon group.

The aliphatic hydrocarbon group may be in a form of straight chain, branched chain, or ring. Specific examples of the aliphatic hydrocarbon group include straight-chain or branched alkyl groups, straight-chain or branched alkenyl groups, and straight-chain or branched alkynyl groups. The number of the aliphatic hydrocarbon group is not particularly limited; however, from the perspective of achieving superior effects of the present invention, the number of carbons is preferably 5 or greater, and more preferably 10 or greater. The upper limit of the number of carbons of the aliphatic hydrocarbon group is not particularly limited; however, from the perspective of achieving superior effects of the present invention, the number of carbons is preferably 30 or less, and more preferably 20 or less. From the perspective of achieving superior effects of the present invention, the number of carbons of the aliphatic hydrocarbon group is preferably from 12 to 18.

n

As described above, n represents an integer of 1 or greater. Among these, from the perspective of achieving superior effects of the present invention, n is preferably an integer of 2 or greater, and more preferably an integer of 5 or greater. The upper limit of n is not particularly limited; however, from the perspective of achieving superior effects of the present invention, n is preferably an integer of 100 or less, more preferably an integer of 50 or less, and even more preferably an integer of 20 or less. From the perspective of achieving superior effects of the present invention, n is preferably an integer of 1 to 15.

Specific example

Specific examples of the specific non-ionic surfactant include a polyoxyethylene alkyl ether, a polyoxyethylene propylene alkyl ether, a polyoxyethylene alkenyl ether, and a polyoxyethylene propylene alkenyl ether, which have HLB values of 4.5 or greater and 10.5 or less.

Content

In the pre-treatment agent according to an embodiment of the present invention, a content of the specific non-ionic surfactant with respect to the total amount of the pre-treatment agent is 0.5 mass% or greater and 30 mass% or less. Among these, from the perspective of achieving superior effects of the present invention, the content is preferably from 0.5 to 20 mass%, more preferably from 0.5 to 15 mass%, even more preferably from 0.5 to 10 mass%, and particularly preferably from 0.5 to 5 mass%.
In the pre-treatment agent according to an embodiment of the present invention, a content of the specific non-ionic surfactant with respect to water described below is preferably from 1 to 100 mass%, more preferably from 1 to 50 mass%, and even more preferably from 1 to 20 mass%, from the perspective of achieving superior effects of the present invention.
In the pre-treatment agent according to an embodiment of the present invention, a content of the specific non-ionic surfactant with respect to the specific organic solvent described below is preferably from 0.5 to 100 mass%, more preferably from 0.5 to 50 mass%, even more preferably from 0.5 to 20 mass%, and particularly preferably from 0.5 to 10 mass%, from the perspective of achieving superior effects of the present invention.

Water

As described above, the pre-treatment agent according to an embodiment of the present invention contains water.

Content

In the pre-treatment agent according to an embodiment of the present invention, a content of water with respect to the total amount of the pre-treatment agent is preferably from 10 to 50 mass%, and more preferably from 20 to 40 mass%, from the perspective of achieving superior effects of the present invention.

Specific organic solvent

The specific organic solvent is a compound represented by Formula (2) below. The pre-treatment agent according to an embodiment of the present invention may contain two or more types of specific organic solvents.
Formula (2)

$$R^{21}R^{22}N\text{-}CO\text{-}R^{23} \qquad (2)$$

In Formula (2), $R^{21}$, $R^{22}$, and $R^{23}$ each independently represent a hydrogen atom or a substituent. $R^{21}$ or $R^{22}$ may be bonded to $R^{23}$ to form a ring.
Specific examples of the substituent include a halogen atom, an alkyl group (e.g., a tert-butyl group) (including a cycloalkyl group, a bicycloalkyl group, and a tricycloalkyl group), an alkenyl group (including a cycloalkenyl group and a bicycloalkenyl group), an alkynyl group, an aryl group, a heterocyclic group (may be referred to as a heterocyclic group), a cyano group, a hydroxy group, a nitro group, a nitroso group, a carboxy group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group (including an anilino group), an ammonio group, an acylamino group, an aminocarbonylamino group, an alkoxycarbonylamino group, an aryloxycarbonylamino group, a sulfamoylamino group, an alkyl or aryl sulfonylamino group, a mercapto group, an alkylthio group, an arylthio group, a heterocyclic thio group, a sulfamoyl group, a sulfo group, an alkyl or aryl sulfinyl group, an alkyl or aryl sulfonyl group, an acyl group, an aryloxycarbonyl group, an alkoxycarbonyl group, a carbamoyl group, an aryl or heterocyclic azo group, an imide group, a phosphino group, a phosphinyl group, a phosphinyloxy group, a phosphinylamino group, a phosphono group, a silyl group, a hydrazino group, a ureide group, a boronic acid group ($-B(OH)_2$), a phosphate group ($-OPO(OH)_2$), a sulphate group ($-OSO_3H$), an alkoxysilyl group, and other known substituents. Among these specific examples, ionic groups (e.g., a carboxy group and a sulfo group) may be salts.

From the perspective of achieving superior effects of the present invention, the substituent is preferably a group represented by -L-R. Note that L represents a single bond or a divalent linking group, and R represents a hydrocarbon group.

Examples of the divalent linking group represented by L include a divalent aliphatic hydrocarbon group (e.g., an alkylene group, preferably having from 1 to 8 carbons), divalent aromatic hydrocarbon groups (e.g., arylene group, preferably having from 6 to 12 carbons), an alkylene oxy group, -O-, -S-, $-SO_2-$, -N(R)- (R: alkyl group), -CO-, -NH-, -COO-, -CONH-, or a group having a combination of these.

Examples of the hydrocarbon group represented by R include an aliphatic hydrocarbon group, an aromatic hydrocarbon group, and a group having a combination of these.

The aliphatic hydrocarbon group may be in a form of straight chain, branched chain, or ring. Specific examples of the aliphatic hydrocarbon group include straight-chain or branched alkyl groups (especially, those having from 1 to 30 carbons), straight-chain or branched alkenyl groups (especially, those having from 2 to 30 carbons), and straight-chain or branched alkynyl groups (especially, those having from 2 to 30 carbons).

Examples of the aromatic hydrocarbon group include aromatic hydrocarbon groups having from 6 to 18 carbons, such as a phenyl group, a tolyl group, a xylyl group, and a naphthyl group.

$R^{21}$ and $R^{22}$ are preferably an aliphatic hydrocarbon group (especially, an alkyl group) from the perspective of achieving superior effects of the present invention. $R^{23}$ is preferably a hydrogen atom or an aliphatic hydrocarbon group (especially, an alkyl group), and more preferably a hydrogen atom, from the perspective of achieving superior effects of the present invention.

As described above, $R^{21}$ or $R^{22}$ may be bonded to $R^{23}$ to form a ring; however, from the perspective of achieving superior effects of the present invention, preferably, no ring is formed. An example of an aspect in which $R^{21}$ or $R^{22}$ is bonded to $R^{23}$ to form a ring is N-methylpyrrolidone.

In a case where the specific organic solvent contains a compound represented by Formula (2) (where $R^{21}$ or $R^{22}$ is bonded to $R^{23}$ to form a ring), from the perspective of achieving superior effects of the present invention, the content thereof with respect to the total amount of the specific organic solvent is preferably 30 mass% or less, more preferably 20 mass% or less, and even more preferably 10 mass% or less.

Specific example

Specific examples of the specific organic solvent include dimethylformamide (DMF), dimethylacetamide (DMAc), dimethylurea, and N-methylpyrrolidone (NMP). Among them, DMF and dimethylurea are preferred, and DMF is more preferred.

Content

In the pre-treatment agent according to an embodiment of the present invention, a content of the specific organic solvent with respect to the total amount of the pre-treatment agent is preferably from 20 to 90 mass%, and more preferably from 30 to 70 mass%, from the perspective of achieving superior effects of the present invention.

From the perspective of achieving superior effects of the present invention, the specific organic solvent preferably contains two or more types of compounds represented by Formula (2).

From the perspective of achieving superior effects of the present invention, the specific organic solvent preferably contains a compound represented by Formula (2) (where at least one of $R^{21}$ or $R^{22}$ is a hydrogen atom), and the content thereof with respect to the total amount of the specific organic solvent is preferably from 1 to 100 mass%, more preferably from 2 to 50 mass%, even more preferably from 5 to 40 mass%, and particularly preferably from 10 to 30 mass%, from the perspective of achieving superior effects of the present invention.

Water/specific organic solvent

In the pre-treatment agent according to an embodiment of the present invention, a content of the water with respect to the amount of the specific organic solvent is preferably from 30 to 100 mass%, and more preferably from 50 to 80 mass%, from the perspective of achieving superior effects of the present invention.

Preparation method

The method of preparing the pre-treatment agent according to an embodiment of the present invention is not particularly limited, and examples thereof include a method of mixing the components described above.

Use

The pre-treatment agent according to an embodiment of the present invention is useful as a pre-treatment agent for pre-treating a surface of a vulcanized rubber at the time of fixing another material (e.g., a rubber container containing a device) onto the vulcanized rubber (e.g., tire (especially, innerliner)) by using an adhesive.
The pre-treatment is not particularly limited, and examples thereof include a method in which the pre-treatment agent is applied onto a surface of a vulcanized rubber and then dried.
The adhesive is not particularly limited, and specific examples thereof include a rubber-based adhesive, an acrylic-based adhesive, a vinyl alkyl ether-based adhesive, a silicone-based adhesive, a polyester-based adhesive, a polyamide-based adhesive, a urethane-based adhesive, and a cyanoacrylate-based adhesive.

Examples

An embodiment of the present invention will be described in further detail below by way of examples. However, an embodiment of the present invention is not limited to these examples.

Preparation of pre-treatment agent

The components listed in Table 1 below were mixed in the proportions (part by mass) listed in the same table below, and thereby each pre-treatment agent was prepared.

Adhesiveness

The obtained pre-treatment agent was applied to an innerliner on an inner surface of a tire (after vulcanization) (applied amount: 0.2 to 0.5 $g/cm^2$) and dried at 25°C for 1 hour. Thereafter, Aron Alpha EX (cyanoacrylate-based one-part moisture-curable adhesive) was applied to a section to which the pre-treatment agent was applied, and a rubber container (vulcanized product of a rubber composition containing a natural rubber) containing a sensor was compression-bonded. The rubber container was detached from the innerliner after one day had elapsed, and the peel strength at this time was measured. Then, the adhesiveness was evaluated based on the following criteria. The results are shown in Table 1. Practically, the adhesiveness is preferably Excellent, Good, or Fair, more preferably Excellent or Good, and even more preferably Excellent.

- Excellent: 25 N/m or greater
- Good: 20 N/m or greater and less than 24 N/m
- Fair: 8 N/m or greater and less than 19 N/m
- Poor: less than 8 N/m

Table 1-1

| Table 1 | Comparative Example 1 | Example 1 | Example 2 | Example 3 | Example 4 |
|---|---|---|---|---|---|
| Comparative non-ionic surfactant 1 (HLB value = 3, straight-chain alkyl group having 8 carbons, n = 1) | 5 | | | | |
| Specific non-ionic surfactant 1 (HLB value = 5, straight-chain alkyl group having 12 carbons, n = 4) | | 5 | | | |

(continued)

| Table 1 | Comparative Example 1 | Example 1 | Example 2 | Example 3 | Example 4 |
|---|---|---|---|---|---|
| Specific non-ionic surfactant 2 (HLB value = 7.8, straight-chain alkyl group having 14 carbons, n = 10) | | | 5 | | |
| Specific non-ionic surfactant 3 (HLB value = 9.6, straight-chain alkyl group having 16 carbons, n = 10) | | | | 5 | |
| Specific non-ionic surfactant 4 (HLB value = 10.4, oleyl group, n = 12) | | | | | 5 |
| Comparative non-ionic surfactant 2 (HLB value = 12.5, straight-chain alkyl group having 23 carbons, n = 23) | | | | | |
| Water | 35 | 35 | 35 | 35 | 35 |
| Dimethylformamide | 50 | 50 | 50 | 50 | 50 |
| Dimethylurea | 10 | 10 | 10 | 10 | 10 |
| N-methylpyrrolidone | | | | | |
| Adhesiveness | Poor | Excellent | Excellent | Excellent | Excellent |

Table 1-2

| Table 1 | Comparative Example 2 | Example 5 | Example 6 | Example 7 |
|---|---|---|---|---|
| Comparative non-ionic surfactant 1 (HLB value = 3, straight-chain alkyl group having 8 carbons, n = 1) | | | | |
| Specific non-ionic surfactant 1 (HLB value = 5, straight-chain alkyl group having 12 carbons, n = 4) | | | | |
| Specific non-ionic surfactant 2 (HLB value = 7.8, straight-chain alkyl group having 14 carbons, n = 10) | | 0.5 | 10 | 20 |
| Specific non-ionic surfactant 3 (HLB value = 9.6, straight-chain alkyl group having 16 carbons, n = 10) | | | | |
| Specific non-ionic surfactant 4 (HLB value = 10.4, oleyl group, n = 12) | | | | |
| Comparative non-ionic surfactant 2 (HLB value = 12.5, straight-chain alkyl group having 23 carbons, n = 23) | 5 | | | |
| Water | 35 | 35 | 35 | 35 |
| Dimethylformamide | 50 | 50 | 50 | 45 |
| Dimethylurea | 10 | 14.5 | 5 | |
| N-methylpyrrolidone | | | | |
| Adhesiveness | Poor | Excellent | Good | Good |

Table 1-3

| Table 1 | Example 8 | Example 9 | Comparative Example 3 | Comparative Example 4 |
|---|---|---|---|---|
| Comparative non-ionic surfactant 1 (HLB value = 3, straight-chain alkyl group having 8 carbons, n = 1) | | | | |
| Specific non-ionic surfactant 1 (HLB value = 5, straight-chain alkyl group having 12 carbons, n = 4) | | | | |
| Specific non-ionic surfactant 2 (HLB value = 7.8, straight-chain alkyl group having 14 carbons, n = 10) | 28 | 5 | 5 | 5 |
| Specific non-ionic surfactant 3 (HLB value = 9.6, straight-chain alkyl group having 16 carbons, n = 10) | | | | |
| Specific non-ionic surfactant 4 (HLB value = 10.4, oleyl group, n = 12) | | | | |
| Comparative non-ionic surfactant 2 (HLB value = 12.5, straight-chain alkyl group having 23 carbons, n = 23) | | | | |
| Water | 35 | 35 | 95 | |
| Dimethylformamide | 37 | 50 | | 50 |
| Dimethylurea | | | | 45 |
| N-methylpyrrolidone | | 10 | | |
| Adhesiveness | Fair | Fair | Poor | Poor |

Details of each of the components in Table 1 are as follows.

- Comparative non-ionic surfactant 1: Compound represented by Formula (1) described above (where $R^{11}$ is $-CH_2-CH_2-$, $R^{12}$ is a straight-chain alkyl group having 8 carbons (n-octyl group), and n is 1). The HLB value is 3. Although the comparative non-ionic surfactant 1 is a compound represented by Formula (1) above, since the HLB value is less than 4.5, the comparative non-ionic surfactant 1 does not correspond to the specific non-ionic surfactant described above.
- Specific non-ionic surfactant 1: Compound represented by Formula (1) described above (where $R^{11}$ is $-CH_2-CH_2-$, $R^{12}$ is a straight-chain alkyl group having 12 carbons, and n is 4). The HLB value is 5.
- Specific non-ionic surfactant 2: Compound represented by Formula (1) described above (where $R^{11}$ is $-CH_2-CH_2-$, $R^{12}$ is a straight-chain alkyl group having 14 carbons, and n is 10). The HLB value is 7.8.
- Specific non-ionic surfactant 3: Compound represented by Formula (1) described above (where $R^{11}$ is $-CH_2-CH_2-$, $R^{12}$ is a straight-chain alkyl group having 16 carbons (cetyl group), and n is 10). The HLB value is 9.6.
- Specific non-ionic surfactant 4: Compound represented by Formula (1) described above (where $R^{11}$ is $-CH_2-CH_2-$, $R^{12}$ is an oleyl group, and n is 12). The HLB value is 10.4.
- Comparative non-ionic surfactant 2: Compound represented by Formula (1) described above (where $R^{11}$ is $-CH_2-CH_2-$, $R^{12}$ is a straight-chain alkyl group having 23 carbons, and n is 23). The HLB value is 12.5. Although the comparative non-ionic surfactant 2 is a compound represented by Formula (1) above, since the HLB value is more than 10.5, the comparative non-ionic surfactant 2 does not correspond to the specific non-ionic surfactant described above.

In Table 1, for the non-ionic surfactants, description in the parentheses indicates, from left, the HLB value, $R^{12}$ in Formula (1), and n in Formula (1).

As can be seen from Table 1, all of Examples 1 to 9, in which the pre-treatment agent containing a combination of the specific non-ionic surfactant, water, and the specific organic solvent was used, exhibited excellent adhesiveness.

From the comparison of Example 2 and Examples 5 to 8 (comparison of aspects with different contents of the specific non-ionic surfactant), Examples 2 and 5 to 7, in which the contents of the specific non-ionic surfactant were from 0.5 to 20 mass%, exhibited superior adhesiveness. Among these, Examples 2 and 5, in which the contents of the specific non-ionic surfactant were from 0.5 to 5 mass%, exhibited even better adhesiveness.

From the comparison of Example 2 and Example 9 (comparison of aspects containing 5 parts by mass of the specific non-ionic surfactant 2), Example 2, in which the specific organic solvent only contained the compound represented by Formula (2) described above (except aspects where $R^{21}$ or $R^{22}$ is bonded to $R^{23}$ to form a ring), exhibited superior adhesiveness.

On the other hand, Comparative Examples 1 and 2, which contained no specific non-ionic surfactant, Comparative Example 3, which contained no specific organic solvent, and Comparative Example 4, which contained no water, exhibited unsatisfactory adhesiveness.

**Claims**

1. A pre-adhesion treatment agent for a vulcanized rubber, the treatment agent comprising: a specific non-ionic surfactant, water, and a specific organic solvent;

    the specific non-ionic surfactant having an HLB value of 4.5 or greater and 10.5 or less and being a compound represented by Formula (1);
    the specific organic solvent being a compound represented by Formula (2); and
    a content of the specific non-ionic surfactant being 0.5 mass% or greater and 30 mass% or less;

    $$HO\text{-}(R^{11}\text{-}O)_n\text{-}R^{12} \qquad (1)$$

    where $R^{11}$ represents $-CH_2\text{-}CH_2\text{-}$, $-CH(CH_3)\text{-}CH_2\text{-}$, or $-CH_2\text{-}CH(CH_3)\text{-}$, $R^{12}$ represents an aliphatic hydrocarbon group, and n represents an integer of 1 or greater;

    $$R^{21}R^{22}N\text{-}CO\text{-}R^{23} \qquad (2)$$

    where $R^{21}$, $R^{22}$, and $R^{23}$ each independently represent a hydrogen atom or a substituent, and $R^{21}$ or $R^{22}$ may be bonded to $R^{23}$ to form a ring.

2. The pre-adhesion treatment agent for a vulcanized rubber according to claim 1, wherein $R^{12}$ in Formula (1) is an aliphatic hydrocarbon group having from 12 to 18 carbons.

3. The pre-adhesion treatment agent for a vulcanized rubber according to claim 1 or 2, wherein n in Formula (1) is an integer of 1 to 15.

4. The pre-adhesion treatment agent for a vulcanized rubber according to any one of claims 1 to 3, wherein the pre-adhesion treatment agent for a vulcanized rubber is a pre-adhesion treatment agent for a tire.

5. The pre-adhesion treatment agent for a vulcanized rubber according to claim 4, wherein the pre-adhesion treatment agent for a vulcanized rubber is a pre-adhesion treatment agent for an innerliner.

## INTERNATIONAL SEARCH REPORT

International application No.

**PCT/JP2021/048202**

### A. CLASSIFICATION OF SUBJECT MATTER

***B60C 1/00***(2006.01)i; ***C09D 5/00***(2006.01)i; ***C09D 171/02***(2006.01)i; ***C09D 7/20***(2018.01)i
FI:    C09D171/02; C09D5/00 D; C09D7/20; B60C1/00 Z

According to International Patent Classification (IPC) or to both national classification and IPC

### B. FIELDS SEARCHED

Minimum documentation searched (classification system followed by classification symbols)

B60C1/00-19/12; C09D1/00-10/00; 101/00-201/10; C09J1/00-201/10; C11D1/00-19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2005-350057 A (THE GOODYEAR TIRE & RUBBER COMPANY) 22 December 2005 (2005-12-22)<br>paragraphs [0014], [0016] | 1-5 |
| A | JP 2005-75872 A (MITSUI TAKEDA CHEMICALS INC) 24 March 2005 (2005-03-24)<br>claims, paragraphs [0007], [0010] | 1-5 |
| A | JP 2005-262921 A (SUMITOMO RUBBER IND LTD) 29 September 2005 (2005-09-29)<br>paragraph [0035] | 1-5 |
| A | JP 2019-99146 A (HANKOOK TIRE CO LTD) 24 June 2019 (2019-06-24)<br>claim 11 | 1-5 |
| A | JP 8-67117 A (BRIDGESTONE CORP) 12 March 1996 (1996-03-12)<br>claims, paragraphs [0025] | 1-5 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **11 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/048202**

| Patent document cited in search report | | | Publication date (day/month/year) | Patent family member(s) | | | Publication date (day/month/year) |
|---|---|---|---|---|---|---|---|
| JP | 2005-350057 | A | 22 December 2005 | US | 2005/0274448 | A1 paragraphs [0024], [0026] | |
| JP | 2005-75872 | A | 24 March 2005 | (Family: none) | | | |
| JP | 2005-262921 | A | 29 September 2005 | US | 2005/0205183 | A1 paragraph [0087] | |
| JP | 2019-99146 | A | 24 June 2019 | US | 2019/0160895 | A1 claim 11 | |
| JP | 8-67117 | A | 12 March 1996 | US | 5500065 | A claims, column 6, lines 39-57 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005350057 A